(19) Europäisches Patentamt
European Patent Office
Office européen des brevets

(11) **EP 0 953 805 B1**

(12) **EUROPÄISCHE PATENTSCHRIFT**

(45) Veröffentlichungstag und Bekanntmachung des Hinweises auf die Patenterteilung:
**13.11.2002   Patentblatt 2002/46**

(51) Int Cl.$^7$: **F23N 5/08**

(21) Anmeldenummer: **98107659.9**

(22) Anmeldetag: **24.04.1998**

(54) **Flammendetektor**

Flame monitor

Dispositif de surveilliance de flamme

(84) Benannte Vertragsstaaten:
**CH DE DK ES FR GB IT LI NL SE**

(43) Veröffentlichungstag der Anmeldung:
**03.11.1999   Patentblatt 1999/44**

(73) Patentinhaber: **Siemens Building Technologies AG**
**6300 Zug (CH)**

(72) Erfinder:
- **Popovic, Radivoje**
  **6300 Zug (CH)**
- **Pauchard, Alexandre**
  **1630 Bulle (CH)**
- **Flanagan, Adrian**
  **02130 Espoo (FI)**
- **Racz, Robert**
  **6300 Zug (CH)**
- **Manic, Dragan**
  **1007 Lausanne (CH)**
- **Wolffenbuttel, Reinoud**
  **2624 MC Delft (NL)**

(74) Vertreter: **Berg, Peter, Dipl.-Ing. et al**
**European Patent Attorney,**
**Siemens AG,**
**Postfach 22 16 34**
**80506 München (DE)**

(56) Entgegenhaltungen:
DE-A- 2 344 934          DE-B- 1 248 214
GB-A- 2 107 050          US-A- 4 157 506

- **PATENT ABSTRACTS OF JAPAN vol. 011, no. 146 (M-587), 13. Mai 1987 & JP 61 280313 A (SANYO ELECTRIC CO LTD;OTHERS: 01), 10. Dezember 1986**

## Beschreibung

Die Erfindung betrifft einen Flammendetektor der im Oberbegriff des Anspruchs 1 genannten Art.

Solche Flammendetektoren werden verwendet für die Überwachung der Flamme in Brennern. Es ist ihre Aufgabe, ein Verlöschen der Flamme möglichst zeitverzugslos zu erkennen. Flammendetektoren sind ein Schlüsselelement im Sicherheitskonzept der Brenner. Um eine hohe Zuverlässigkeit des Flammendetektors und des Brenners zu erreichen, ist es erforderlich, dass der Flammendetektor nur auf die Strahlung der Flamme anspricht und nicht empfindlich ist auf parasitäre Effekte. Eine Quelle parasitärer Effekte sind die beim Zünden der Flamme entstehenden Funken.

Bekannte Lösungen zur Vermeidung der unerwünschten Detektion von Zündfunken sind einerseits die optische Abschirmung, die verhindert, dass die Strahlung der Zündfunken nicht zum Flammendetektor gelangt. Andererseits werden Flammendetektoren verwendet, die im infraroten Bereich des elektromagnetischen Spektrums empfindlich sind, da der Strahlungsanteil der Zündfunken in diesem Bereich unerheblich ist. Nachteilig bei diesen letzteren Flammendetektoren ist, dass ihr Signal stark von den Betriebsbedingungen des Brenners abhängig ist.

Der Erfindung liegt die Aufgabe zugrunde, einen Flammendetektor vorzuschlagen, der einen im ultravioletten und/oder sichtbaren Bereich des elektromagnetischen Spektrums empfindlichen Strahlungssensor aufweist und dessen Ausgangssignal weitgehend unempfindlich gegenüber Zündfunken ist.

Die genannte Aufgabe wird erfindungsgemäss gelöst durch die Merkmale des Anspruchs 1.

Die Zündfunken induzieren im Strahlungssensor ein wechselförmiges Signal, das sich dem gleichförmigen Signal der Flamme, sofern diese vorhanden ist, überlagert Der zeitliche Verlauf dieses wechselförmigen Signals ist relativ konstant und langzeitstabil. Die Erfindung macht nun davon Gebrauch, indem sie den Wechselspannungsanteil des Signals des Strahlungssensors bestimmt und daraus ein gleichförmiges Signal ableitet, das gleich gross ist wie der Gleichspannungsanteil, den die Zündfunken im Signal des Strahlungssensors generieren. Durch Subtraktion dieses vom Wechselspannungsanteil abgeleiteten gleichförmigen Signals vom gesamten Gleichspannungsanteil des Signals des Strahlungssensors ergibt sich demzufolge ein Signal, das nur noch den von der Flamme stammenden Anteil repräsentiert.

Da der Zündfünkengenerator mit Netzspannung betrieben wird, weist das von den Zündfunken im Flammendetektor erzeugte Signal ein Frequenzspektrum mit Maxima bei der Netzfrequenz und bei Vielfachen der Netzfrequenz auf. Nun gibt es Zündfunkengeneratoren eines ersten Typs, die im Flammendetektor ein Signal mit einem ausgeprägten Maximum bei der Netzfrequenz erzeugen, und Zündfunkengeneratoren eines zweiten Typs, die im Flammendetektor ein Signal mit einem ausgeprägten Maximum bei der doppelten Netzfrequenz erzeugen. Gemäss einer weiteren Erfindungsidee wird deshalb der Wechselspannungsanteil des Signals des Strahlungssensors mittels eines Filters abgeleitet, dessen Charakteristik für die doppelte Netzfrequenz eine um einen vorbestimmten Faktor höhere Durchlässigkeit als für die Netzfrequenz aufweist. Das Signal am Ausgang des Filters entspricht dann sowohl für Zündfunkengeneratoren des ersten Typs wie für Zündfunkengeneratoren des zweiten Typs dem von ihnen erzeugten Gleichspannungsanteil.

Nachfolgend wird ein Ausführungsbeispiel der Erfindung anhand der Zeichnung näher erläutert.

Es zeigen:

Fig. 1      den zeitlichen Verlauf des Signals eines Strahlungssensors und dessen Zerlegung in verschiedene Anteile,

Fig. 2      ein Blockschaltbild eines Flammendetektors

Fig. 3      ein Schaltschema des Flammendetektors, und

Fig. 4      die Charakteristik eines Filters.

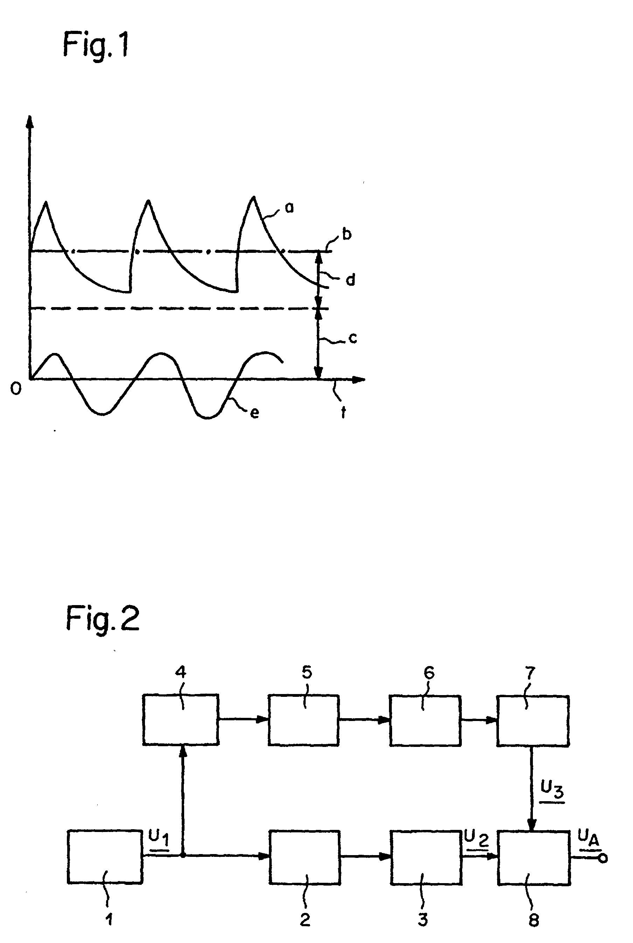

Die Fig. 1 zeigt als Kurve a den zeitlichen Verlauf des Signals $U_1$ eines in einem Brenner angeordneten Strahlungssensors 1 (Fig. 2), wenn ein Zündfunkengenerator (des ersten Typs) in Betrieb ist und Zündfunken produziert und wenn die Flamme bereits brennt. Als Kurve b ist der Gleichspannungsanteil des gesamten Signals dargestellt, der einen von der Flamme stammenden Anteil c und einen von den Zündfunken stammenden Anteil d enthält. Als Kurve e ist schliesslich der Anteil des von den Zündfunken stammenden Wechselspannungsanteils eingezeichnet, dessen Frequenz der Netzfrequenz entspricht. Das Verhältnis der Amplitude des Wechselspannungsanteils (Kurve e) zur Amplitude des Gleichspannungsanteils (Anteil d) ist unterschiedlich für Zündfunkengeneratoren unterschiedlichen Typs. Wie später erläutert ist, kann diese Verschiedenartigkeit durch entsprechende Filter kompensiert werden, wenn die massgeblichen Frequenzen des Wechselspannungsanteils auch unterschiedlich sind. Dies ermöglicht es, den gleichen Flammendetektor für unterschiedliche Zündfunkengeneratoren verwenden zu können.

Die Fig. 2 zeigt einen Flammendetektor, der als Sensor zur Detektion der von der Flamme eines Brenners abgegebenen Strahlung einen im ultravioletten und/oder sichtbaren Bereich des elektromagnetischen Spektrums empfindlichen Strahlungssensor 1 aufweist. Das Signal $U_1$ am Ausgang des Strahlungssensors 1 wird nun einerseits in herkömmlicher Weise mittels eines Tiefpassfilters 2 gefiltert und mittels eines nachgeschalteten Verstärkers 3 zu einem Signal $U_2$ verstärkt. Das Signal $U_1$ wird andererseits mittels eines Hochpassfilters 4 gefiltert, mittels eines zweiten Verstärkers 5 verstärkt, mittels eines Gleichrichters 6 gleichgerichtet und mittels eines zweiten Tiefpassfilters 7 geglättet. Das Signal $U_2$ ist somit proportional zum Gleichspannungsanteil des Signals $U_1$ am Ausgang des Strahlungssensors 1, während das Signal $U_3$ am Ausgang des Tiefpassfilters 7 proportional zum Wechselspannungsanteil des Signals $U_1$ ist. Ein Subtrahierglied 8 bildet aus den Signalen $U_2$ und $U_3$ das Ausgangssignal $U_A$ des Flammendetektors zu

$$U_A = U_2 - U_3.$$

Der Verstärkungsfaktor des zweiten Verstärkers 5 ist im Vergleich zum Verstärkungsfaktor des ersten Verstärkers 3 entsprechend dem Verhältnis des Wechselspannungsanteils (Fig. 1, Kurve e) zum Gleichspannungsanteil (Fig. 1, Amplitude d) des durch die Zündfunken induzierten Signales und unter Berücksichtigung der Charakteristika der Filter 2, und 7 so bemessen, dass der Wert des gleichförmigen Ausgangssignals $U_A$ unabhängig davon ist, ob Zündfunken einen Beitrag zum Signal $U_1$ liefern oder nicht.

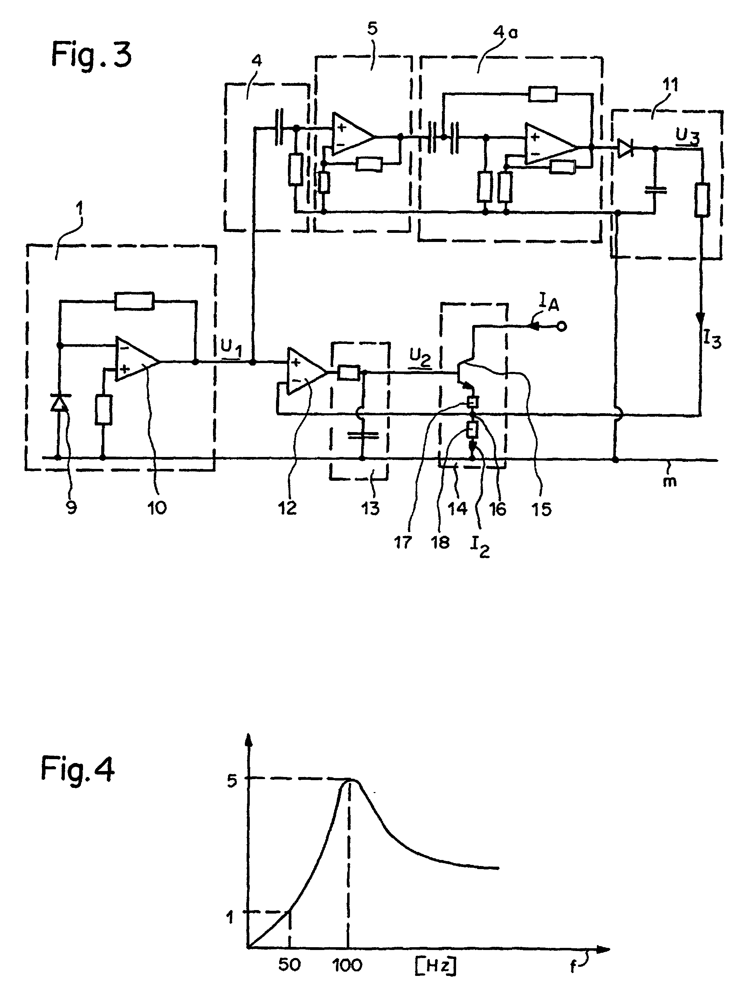

Die Fig. 3 zeigt ein Schaltschema des Flammendetektors, wobei die verwendeten Symbole für Widerstände, Kondensatoren, Dioden, Operationsverstärker und Transistoren den in der Elektronik üblichen Symbolen entsprechen. Das Ausgangssignal des Flammendetektors ist hier nicht die Spannung $U_A$, sondern ein der Spannung $U_A$ entsprechender Strom $I_A$. Der Strahlungssensor 1 weist eine im ultravioletten Bereich empfindliche UV-Diode 9 und einen Verstärker 10 auf, der das extrem schwache Signal der UV-Diode 9 unmittelbar verstärkt. Mit m ist das Bezugspotential bezeichnet. Die Speisung der aktiven Bausteine ist der Übersichtlichkeit wegen nicht dargestellt.

Die Netzfrequenz beträgt in Europa bekanntlich 50 Hz, in den USA 60 Hz. Die Zahlen im Beispiel sind nun auf die europäischen Verhältnisse zugeschnitten. Zur Gewinnung des Wechselspannungsanteils $U_3$ wird das Signal $U_1$ am Ausgang des Strahlungssensors 1 dem durch einen Kondensator und einen Widerstand gebildeten Hochpassfilter 4 zugeführt, mittels des zweiten Verstärkers 5 verstärkt, mittels eines zweiten Hochpassfilters 4a, das beispielsweise ein Chebyshevfilter 2. Ordnung ist, derart gefiltert, dass die 100 Hz Komponente (doppelte Netzfrequenz) des Signals $U_1$ um einen vorbestimmten Faktor stärker verstärkt wird als die 50 Hz Komponente (Netzfrequenz) des Signals $U_1$ und anschliessend mittels eines gleichzeitig als Peakdetektor wirkenden Spannungs-/Stromwandlers 11 in einen Strom $I_3$ umgewandelt.

Zur Gewinnung des Gleichstromanteils $U_2$ des Signals $U_1$ wird das Signal $U_1$ in einem aus einem als Impedanzwandler geschalteten Operationsverstärker 12, einem RC-Glied 13 und einem Spannungs/Stromwandler 14 bestehenden Schaltungsblock gefiltert und verstärkt. Der Transistor 15 des Spannungs-/Stromwandlers 14 wird vom Operationsverstärker 12 so gesteuert, dass die Spannung am Knotenpunkt 16 zwischen den beiden Widerständen 17, 18 gleich dem vom Strahlungssensor 1 gelieferten Gleichspannungsanteil $U_2$ der Spannung $U_1$ ist, die am positiven Eingang des Operationsverstärkers 12 anliegt. Dem Knotenpunkt 16 wird nun auch der Strom $I_3$ zugeführt, so dass sich in der Folge der durch den Transistor 15 fliessende Strom $I_A$ um den Strom $I_3$ reduziert. Der Spannungs/Stromwandler 14 erfüllt somit gleichzeitig die Funktion als Subtraktionsglied 8 (Fig. 2). Der Ausgang des Flammendetektors führt somit den Strom $I_A = I_2 - I_3$, wobei der Strom $I_2$ ein der Spannung $U_2$ proportionaler Strom ist. Der durch den Transistor 15 fliessende Strom $I_A$ ist daher proportional zu der von der Flamme abgegebenen und mit der UV-Diode 9 gemessenen Strahlung.

Die Fig. 4 zeigt die Filtercharakteristik, die sich durch das Hochpassfilter 4, den Verstärker 5 und das zweite Hochpassfilter 4a gemäss dem in der Fig. 3 dargestellten Schaltungsaufbau insgesamt ergibt. Das Hochpassfilter 4a, das bevorzugt als Chebyshev Filter 2. Ordnung realisiert ist, ist so dimensioniert, dass die Frequenz 100 Hz (doppelte Netzfrequenz) etwa fünfmal besser durchgelassen wird als die Frequenz 50 Hz (Netzfrequenz). Dies ermöglicht die Verwendung des Flammendetektors für Zündfunkengeneratoren des ersten wie des zweiten Typs.

Der Flammendetektor unterdrückt auch Signale anderer Lichtquellen wie z.B. Neonröhren, die im Signal des Strahlungssensors 1 (Fig. 2) einen Wechselspannungsanteil der Netzfrequenz oder deren Harmonischen erzeugen. Je nach der Amplitude des Wechselspannungsanteils wird vom Signal $U_3$ ein unterschiedlich grosser Anteil subtrahiert. Es hat sich gezeigt, dass dieser Anteil mehr als ausreichend ist, um den durch Neonröhren induzierten Gleichspannungsanteil vollständig zu kompensieren.

**Patentansprüche**

1. Flammendetektor mit einem im ultravioletten und/ oder sichtbaren Bereich des elektromagnetischen Spektrums empfindlichen Strahlungssensor (1), **dadurch gekennzeichnet, dass** aus dem Signal $U_1$ am Ausgang des Strahlungssensors ein erstes Signal $U_2$ abgeleitet wird, das proportional zum Gleichspannungsanteil des Signals $U_1$ ist, dass aus dem Signal $U_1$ am Ausgang des Strahlungssensors ein zweites Signal $U_3$ abgeleitet wird, das proportional zum Wechselspannungsanteil des Signals $U_1$ ist, und dass das Ausgangssignal $U_A$ des Flammendetektors gebildet wird zu

$$U_A = U_2 - U_3.$$

2. Flammendetektor nach Anspruch 1, **dadurch gekennzeichnet, dass** das aus dem Wechselspan-

nungsanteil des Signals $U_1$ abgeleitete Signal $U_3$ etwa so gross ist wie der durch Zündfunken erzeugte Anteil des Gleichspannungssignals im Signal $U_1$.

3. Flammendetektor nach Anspruch 1 oder 2, **dadurch gekennzeichnet, dass** das Signal $U_3$ aus dem Signal $U_1$ mittels eines Filters (4; 4a) abgeleitet wird, das für die doppelte Netzfrequenz eine um einen vorbestimmten Faktor höhere Durchlässigkeit als für die Netzfrequenz aufweist.

## Claims

1. A flame detector having a radiation sensor (1) which is sensitive in the ultraviolet and/or visible range of the electromagnetic spectrum **characterised in that** derived from the signal $U_1$ at the output of the radiation sensor is a first signal $U_2$ which is proportional to the dc voltage component of the signal $U_1$, that derived from the signal $U_1$ at the output of the radiation sensor is a second signal $U_3$ which is proportional to the ac voltage component of the signal $U_1$, and that the output signal $U_A$ of the flame detector is formed as:

$$U_A = U_2 - U_3.$$

2. A flame detector according to claim 1 **characterised in that** the signal $U_3$ derived from the ac voltage component of the signal $U_1$ is approximately as large as the component produced by ignition sparks of the dc voltage signal in the signal $U_1$.

3. A flame detector according to claim 1 or claim 2 **characterised in that** the signal $U_3$ is derived from the signal $U_1$ by means of a filter (4; 4a) which has a transmission higher by a predetermined factor for double the mains frequency than for the mains frequency.

## Revendications

1. Détecteur de flammes ayant un capteur de rayonnement (1) sensible à la zone ultraviolette et/ou visible du spectre électromagnétique, **caractérisé en ce qu'**à partir du signal $U_1$, à la sortie du capteur de rayonnement, un premier signal $U_2$ est dévié, qui est proportionnel à la composante continue du signal $U_1$, et qu'à partir du signal $U_1$ en sortie du capteur de radiation, un deuxième signal $U_3$ proportionnel à la composante alternative du signal $U_1$ est dévié et que le signal de départ $U_A$ du détecteur de flammes est généré selon :

$$U_A = U_2 - U_3$$

2. Détecteur de flammes selon la revendication 1, **caractérisé en ce que** le signal $U_3$ dévié à partir de la composante alternative du signal $U_1$ est à peu près aussi grand que la partie du signal de la composante continue générée par l'étincelle d'allumage dans le signal $U_1$.

3. Détecteur de flammes selon la revendication 1 ou 2, **caractérisé en ce que** le signal $U_3$ est dévié à partir du signal $U_1$ au moyen d'un filtre (4 ; 4a), présentant pour la double fréquence réseau, une perméabilité plus grande augmentée d'un facteur prédéterminé, que pour la fréquence réseau.

Fig.1

Fig.2

Fig.3

Fig.4